## Europäisches Patentamt
## European Patent Office
## Office européen des brevets

(19)

(11) Veröffentlichungsnummer: **0 087 382**

**A1**

(12) **EUROPÄISCHE PATENTANMELDUNG**

(21) Anmeldenummer: **83630023.6**

(22) Anmeldetag: **15.02.83**

(51) Int. Cl.³: **G 01 F 23/26**
**B 22 D 11/16**

(30) Priorität: **23.02.82 LU 83969**

(43) Veröffentlichungstag der Anmeldung:
**31.08.83 Patentblatt 83/35**

(84) Benannte Vertragsstaaten:
**BE DE FR GB IT**

(71) Anmelder: **ARBED S.A.**
**Avenue de la Liberté 19**
**L-2930 Luxembourg(LU)**

(72) Erfinder: **Block, Franz-Rudolf, Dr. rer. nat.**
**58 Kalfstrasse**
**D-5106 Roetgen(DE)**

(72) Erfinder: **Liesch, Jean**
**117 rue de Luxembourg**
**L-4221 Esch/Alzette(LU)**

(72) Erfinder: **Angel, Léon**
**12 rue Bessemer**
**L-4032 Esch/Alzette(LU)**

(74) Vertreter: **Neyen, René**
**Administration Centrale de l'Arbed Case postale 1802**
**L-2930 Luxembourg(LU)**

(54) **Verfahren zum Messen des Füllstandes von flüssigen Metallen in Stranggiesskokillen.**

(57) Ein Verfahren zum Messen des Füllstandes von flüssigen Metallen in Stranggiesskokillen, sieht vor, dass in einer Anordnung, bestehend aus dem flüssigen Metall sowie aus Primär- und Sekundärspulen entsprechend der Lage des Metallspiegels zu den Sekundärspulen in diesen Spannungen induziert werden, die man messen kann, indem man in zumindest einer das Gefäss (K) koaxial umschliessenden Spulenanordnung (SP1), die eine felderzeugende Primärspule (P1) und wenigstens drei paarweise gegeneinander geschaltete Sekundärspulen (S1, S2, S3 ....Sn) begreift, die Spannungskennlinien (S1-S2), (S1-S3). (S2-S3), ... aufnimmt und aus den gemessenen Spannungswerten die Lage (L) des Giessspiegels bestimmt.

Sämtliche Spannungskennlinien werden im Hinblick auf ihren Verlauf in Abhängigkeit von der Giessspiegelhöhe untersucht und die Ausdehnung der linearen sowie der nichtlinearen Teilstrecken auf jeder Kennlinie bestimmt und registriert und der Spiegel durch Auswertung der Information der Messpunkte auf mehreren Kennlinien eindeutig ermittelt.

Zum Beeinflussen der Giessspiegellage wirkt man im Fall einer Aktivierung der Spannung an den Spulen (S1, S2...) auf die Abzugsgeschwindigkeit des Stranges ein. Im Fall einer Aktivierung der Spannung an den Spulen (.... S3, Sn) wird die Menge an zugeführtem Frischmetall geregelt.

FIG.1

BEZEICHNUNG GEÄNDERT
siehe Titelseite

Verfahren zum Messen des Füllstandes von flüssigen Metallen in Stranggiesskokillen

Die vorliegende Erfindung betrifft ein Verfahren zum Messen des Füllstandes von flüssigem Metall in Stranggiesskokillen, welches sowohl im Giessbetrieb selbst, als auch beim Anfahren der Stranggiessanlage funktionsfähig ist, bei dem der Metallpegel weit von seiner normalen Betriebsposition entfernt ist.

Es ist bekannt, dass durch Aenderungen der einen Leiter durchsetzenden magnetischen Felder im Leiter Ströme induziert werden und dass aus den Sekundärfeldern dieser Ströme auf die Anwesenheit des Leiters geschlossen werden kann. Bekannt ist auch, dass sich die Impedanz einer Spule ändert, wenn man einen Leiter in das Feld der Spule bringt.

Die FR 2.251.811 beschreibt eine Messmethode die vorsieht, dass ein kontaktloses Induktionsmessgerät die Lage der Grenze zwischen zwei Phasen bestimmt, die unterschiedliche Dichten sowie Leitfähigkeiten aufweisen, wobei zumindest eine der Phasen den Strom leitet ohne magnetisch zu sein. Das Messgerät weist Arbeits- sowie Messspulen auf, die in offener Anordnung auf die Grenze gerichtet sind. Wesentlich ist hierbei, dass das Messystem aus zwei offenen U- förmigen Magnetkernen besteht, die parallel zueinander angeordnet sind, wobei die Messpulen gegeneinander geschaltet sind.

Doch versagen solche Messmethoden beim Stranggiessen von Stahl, da die gut leitende Kupferkokille die Felder so stark abschirmt, dass die Empfindlichkeit der Messeinrichtung nicht befriedigen kann.

Um den Einfluss des Gefässes, z.B. der Kokille auszuschalten kann man ein Verfahren anwenden, das der Anmelder in seiner europäischen Patentanmeldung no. 0010 539 beschrieben hat und das vorsieht, dass eine felderzeugende Primärspule und zwei symmetrisch zu dieser liegende, gegeneinander geschaltete gleichartige Sekundärspulen, sowie das flüssige Metall eine Anordnung bilden, in der die Lage des Metallspiegels zu den Sekundärspulen in diesen eine Spannung hervorrufen kann, die man als Mass für den Füllstand verwendet. Die Primärspule sowie die Sekundärspulen werden berührungslos koaxial um das Gefäss gelegt, es wird zusätzlich zu der in den Sekundärspulen induzierten Spannung die Leitfähigkeit des Metalls gemessen und aus dem unter Berücksichtigung des gemessenen Leitfähigkeitswertes korrigierten Spannungswert die Lage des Metallspiegels bestimmt.

Will man die Lage des Giesspiegels nicht nur im Betrieb, sondern auch während des Anfahrens der Stranggiessanlage verfolgen, so könnte man einfach mehrere Anordnungen gemäss der o.e. Anmeldung vorsehen und entsprechend positionieren.

Obwohl das bekannte Verfahren funktionsfähig ist und eine verlässliche Giesspiegelkontrolle erlaubt, erscheint die gebotene Genauigkeit der Messung durchaus verbesserungsfähig. So ist die Auswertung der gemessenen Spannungswerte zweideutig, da die Spannung über der Giesspiegelhöhe eine Glockenkurve ist, was ausserdem zur Folge hat, dass man im Bereich des Maximums eine unbefriedigende Genauigkeit in Kauf nehmen muss.

Das Ziel der Erfindung bestand darin, ein Verfahren vorzuschlagen, das es erlaubt diesem Mängel abzuhelfen.

Dieses Ziel wird erreicht durch das erfindungsgemässe Verfahren, das vorsieht, dass in einer Anordnung bestehend aus Primär- und Sekundärspulen die Lage des Metallspiegels zu den Sekundärspulen in diesen eine induzierte Spannung hervorrufen kann, die gemessen wird. Das Verfahren ist dadurch gekennzeichnet, dass man in zumindest einer die Kokille (K) koaxial umschliessenden Spulenanordnung (SP1), die eine felderzeugende Primärspule (P1) und wenigstens drei paarweise gegeneinander geschaltete Sekundärspulen (S1, S2, S3...Sn) begreift, die Spannungskennlinien (S1-S2),(S1-S3)..(S1-Sn) ; (S2-S3)..(S2-Sn); ...; (Sn-1-Sn) aufnimmt und aus den gemessenen Spannungswerten die Lage (L) des Giesspiegels bestimmt.

Der Grundgedanke der Erfindung beruht darauf, dass die einzelnen Spannungskennlinien der gegeneinander geschalteten Sekundärspulen (mV - Giesspiegelhöhe) einen gewissen Verlauf aufweisen, der zwar weder insgesamt linear, ja nicht einmal eindeutig ist, der jedoch lineare Teilstrecken aufweist. So stehen bei einer erfindungsgemässen Anordnung von 1 Primär- und 3 Sekundärspulen, 3 Kennlinien zur Verfügung und zwar die Kennlinien (S1-S2), (S1-S3) und (S2-S3). Erfindungsgemäss wird man so vorgehen, dass man sämtliche Spannungskennlinien im Hinblick auf Ihren Verlauf in Abhängigkeit von der Giesspiegelhöhe untersucht und die Ausdehnung der linearen sowie der nichtlinearen Teilstrecken auf jeder Kennlinie bestimmt und registriert.

Gemäss der Erfindung genügt es im Betrieb, dass man nahezu simultan die Spannungswerte auf den Kennlinien (S1-S2), (S1-S3), (S2-S3) aufnimmt und dass man jeweils den Wert auf einer in der Umgebung des Messpunktes linearen Kennlinie als eigentliches Messignal verwendet und die zu wählende Kennlinie und deren linearen Bereich mit Hilfe der Werte der übrigen Kennlinien bestimmt.

Hierdurch lässt sich in sämtlichen Bereichen eine gute Messgenauigkeit erzielen; der Kokille zu erzielen; es lassen sich Unterschiede in der Giessspiegelhöhe mit einer Genauigkeit von 1 mm erfassen.

Weitere Vorteile und Merkmale gehen aus der Beschreibung der Zeichnungen hervor, in denen

- die Fig. 1 eine schematisierte Darstellung einer möglichen Ausführungsform der Anordnung zeigt, mit deren Hilfe die erfindungsgemässe Methode durchgeführt werden kann, während

- die Fig. 2 eine weitere schematisierte Darstellung einer möglichen Ausführungsform zeigt, in welcher 2 Spulenanordnungen mit je 1 Primär- und 3 Sekundärspulen zur Anwendung vorgesehen sind; und

- die Fig. 3 eine Ausführungsform zeigt, in welcher eine Spulenanordnung vorgesehen ist, die 1 Primär- und 3 Sekundärspulen begreift, wobei die Zeichnung zur Veranschaulichung des Verfahrensprinzips nach der Erfindung dient und die Beschreibung von Auswertungsbeispielen unterstützt. Im Gegensatz zur Fig.1 sind hier die Sekundärspulen nicht äquidistant.

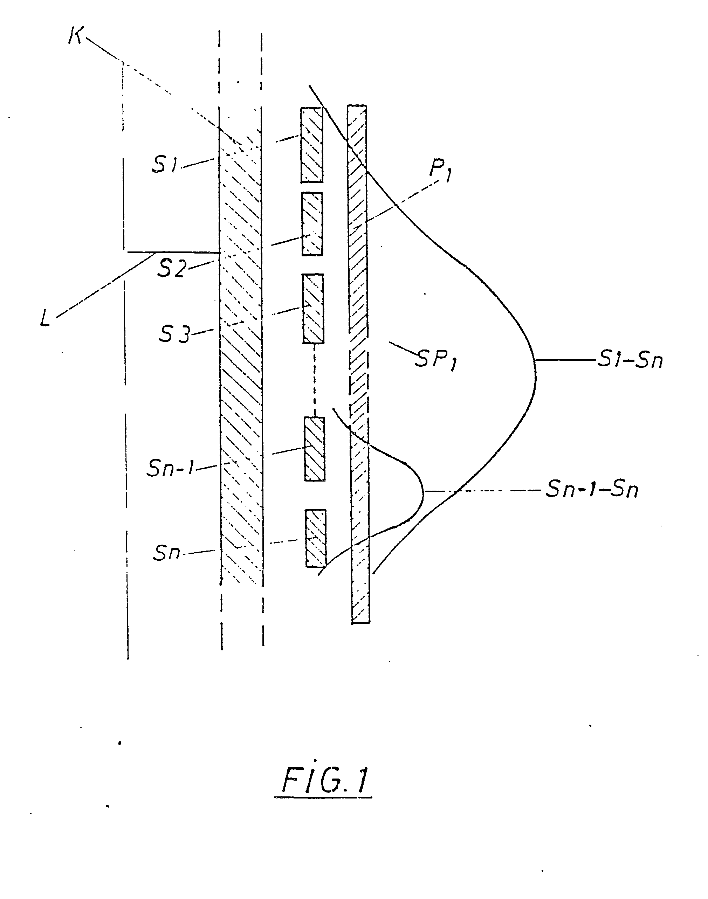

Wie aus der Fig. 1 ersichtlich, umschliesst eine Spulenanordnung (SP1) koaxial die Kokille (K), in der die Lage des Giesspiegels (L) bestimmt werden soll. Es können in einer Anordnung (SP1) eine Primärspule (P1) und beliebig viele Sekundärspulen (S1, S2, ...Sn) vorgesehen sein.

Befindet sich kein Metall in der Kokille, so ist die Gesamtsekundärspannung gleich Null. Steigt der Badspiegel, so werden zunächst bevorzugt in der unteren Spule (Sn) die induzierten Spannungen verringert, so dass die Beträge der resultierenden Spannung (Sn-1-Sn) bzw. (S1-Sn) ansteigt. Bei maximaler Asymmetrie, also wenn sich der Badspiegel zwischen einem Paar von Sekundärspulen befindet, wird ein Maximum der Gesamtsekundärspannung erzielt. Steigt der Badspiegel weiter an, so verschwinden Asymmetrie und Gesamtsekundärspannung wieder. Die einzelnen Spannungswerte ergeben die Kennlinie eines Sekundärspulenpaares, die registriert wird.

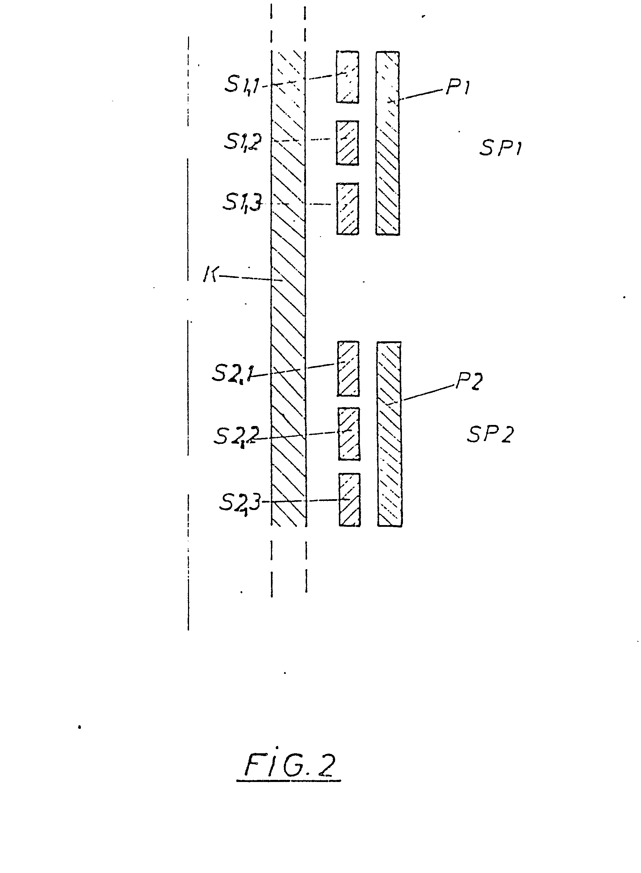

Wie die Fig. 2 zeigt, kann man mehrere Messanordnungen vorsehen; dargestellt ist eine Messanordnung die 2 Spulensysteme (SP1) und (SP2) begreift, wovon jedes aus je einer Primärspule (P1) bzw. (P2) sowie aus je 3 Sekundärspulen (S1,1, S1,2, S1,3) bzw. (S2,1, S2,2, S2,3) besteht. Selbstverständlich kann man, insbesondere zum Erfassen der Giesspiegellage beim Angiessen, mehrere Spulensysteme vorsehen und entsprechend entlang der Kokillenachse positionieren. Man kann aber auch Spulensysteme vorsehen, in denen n Primär- und m Sekundärspulen vorliegen, wobei m zumindest in einem der insgesamt vorgesehenen Spulensysteme mindestens gleich 3 ist.

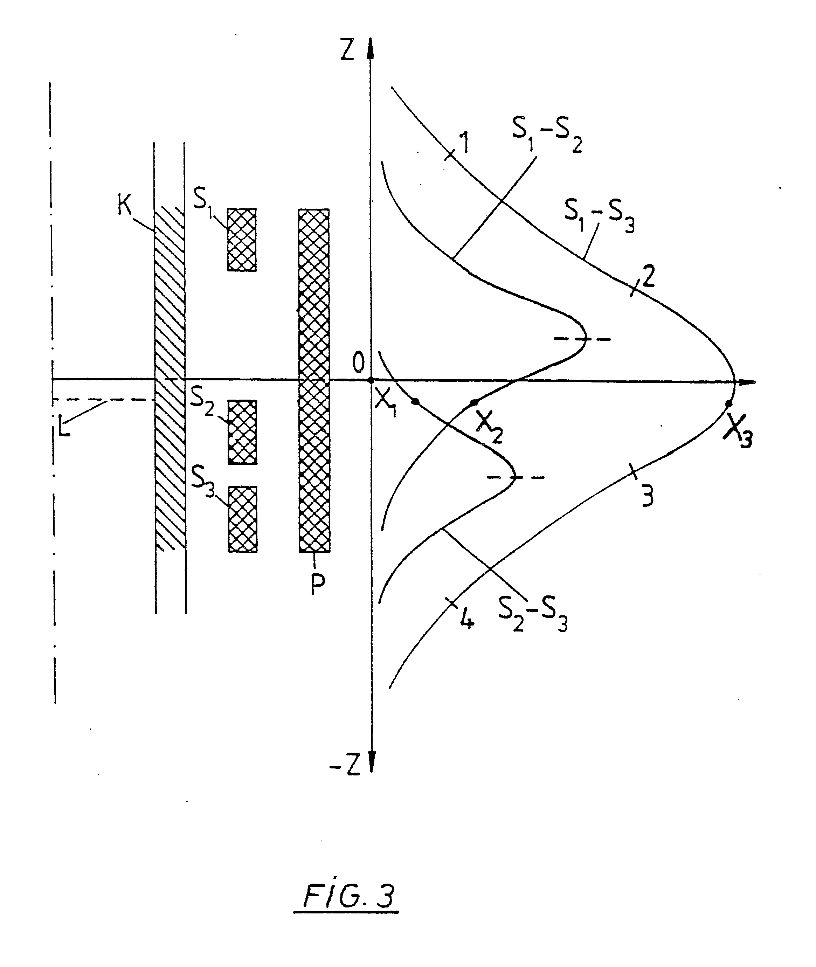

In der Fig. 3 erkennt man die Kokillenwand (K) und die sie koaxial umschliessende Spulenanordnung (SP1). Letztere besteht aus einer Primärspule (P1) und 3 Sekundärspulen (S1, S2, S3). Die Kennlinien der einzelnen Sekundärspulenpaare (S1-S2), (S2-S3) sowie (S1-S3) sind ebenfalls dargestellt. Die mittlere Spule ist so versetzt, dass der gesamte Messbereich mit 3 nahezu geraden Strecken erfasst wird.

Die einzelnen Kennlinien erinnern in ihren Formen an Gauss'sche Verteilungskurven und es ist klar, dass diese Kurven sich nicht in ihrer Gesamtheit als Messkurven zum Bestimmen der Lage (L) des Giesspiegels eignen. So sind in der Linie (S1-S3) lediglich die Strecken zwischen den Punkten (1 und 2) sowie (3 und 4) näherungsweise linear oder zumindest leicht linearisierbar, was auf die zwischen den Punkten (2 und 3) gelegene Strecke nicht zutrifft. Aehnlich verhält es sich bezüglich der Linie (S1-S2) sowie der Linie (S2-S3), in welchen nur gewisse Strecken, z.B. zwischen den Punkten (5 und 6) nahezu gerade und damit zur präzisen Messung geeignet sind.

Befindet sich der Giesspiegel in der dargestellten Lage (L), so ist, wie leicht einzusehen, eine Messung auf der Kennlinie (S1-S3), so wie dies dem Stand der Technik entspricht, nicht präzise genug, da sich der Messpunkt (X3) nahe dem Maximum der Kennlinie befindet, wo die Anderungen des Messwertes mit der Höhe sehr klein sind. Im Maximum selbst verschwinden sie sogar. Greift man jedoch erfindungsgemäss auf die Linien (S1-S2) sowie (S2-S3) zurück, so erhält man die Messpunkte (X1) sowie (X2), die beide auf linearen Strecken liegen und demnach die Voraussetzungen zu einer präzisen Messung erfüllen. Hierbei sei bemerkt, dass selbstverständlich das Vorhandensein eines einzigen, auf einer linearen Strecke gelegenen Messpunktes bereits zur gültigen Aussage führt, jedoch liefert die Existenz von 2 individuellen, auswertbaren Messpunkten eine willkommene zusätzliche Messgenauigkeit, indem man nicht nur einen Spannungswert verfolgt, sondern auch die Differenz zwischen (X1) und (X2) bilden und auswerten kann und auch den Vergleich zwischen den absoluten Grössen von (X1) gegenüber (X2) als Information heranziehen kann.

Stellt man durch einen Vergleich fest, dass der Wert (S1-S2) grösser ist als die Werte in den Punkten 2 und 3, so weiss man zumindest den Bereich in dem sich der Badspiegel befindet. Man kann dann mit diesem zusätzlichen Wissen den genauen Wert von der Kennlinie (S2-S3) ablesen.

Weiter erlaubt die erfindungsgemässe Methode eine Dauerüberprüfung des Systems, indem gemäss der Darstellung in der <u>Fig. 3</u> bspw. in dem betrachteten Bereich ein Anstieg des Wertes von (X1) unbedingt mit einem Abklingen des Wertes von (X2) verbunden sein muss und einen Anstieg der Giesspiegellage (L) signalisiert. Allgemein lassen sich nicht nur die einzelnen Werte sondern auch deren zeitliche Ableitungen für die Messungen heranziehen. Da man üblicherweise nur den Effektivwert der Differenzspannungen misst, werden negative Differenzen nicht in der unteren Halbebene dargestellt, sondern um die Abszisse geklappt. Dabei entstehen in der Regel Knicke in den Kennlinien, deren Spitzen auf der Abszisse liegen. Einfall- und Ausfallwinkel sind jeweils gleich. Die Knicke treten nur in den Randbereichen der Glockenkurve auf; sie lassen sich vermeiden, indem man eine der Messpannungen anhebt bzw. absenkt.

Selbstverständlich werden diese Schlüsse und Ueberlegungen durch einen entsprechend programmierten Mikroprozessor angestellt. Dieser übernimmt auch Steuerfunktionen, die z.B. darin bestehen, dass man zum Beeinflussen der Giesspiegellage im Fall einer Aktivierung der Spannung an den Spulen (S1, S2 ...) auf die Abzugsgeschwindigkeit des Stranges einwirkt und im Fall einer Aktivierung der Spannung an den Spulen (..S3, Sn) die Menge an zugeführtem Frischmetall regelt.

- 1 -                                    0087382

<u>Patentansprüche</u>

1. Verfahren zum Messen des Füllstandes von flüssigen Metallen in Stranggiesskokillen, welches vorsieht, dass in einer Anordnung, bestehend aus dem flüssigen Metall sowie aus Primär- und Sekundärspulen entsprechend der Lage des Metallspiegels zu den Sekundärspulen in diesen Spannungen induziert werden, die gemessen werden, dadurch gekennzeichnet, dass man in zumindest einer das Gefäss (K) koaxial umschliessenden Spulenanordnung (SP1), die eine felderzeugende Primärspule (P1) und wenigstens drei paarweise gegeneinander geschaltete Sekundärspulen (S1, S2, S3 ...Sn) begreift, die Spannungskennlinien (S1-S2), (S1-S3), (S2-S3), ... aufnimmt und aus den gemessenen Spannungswerten die Lage (L) des Giesspiegels bestimmt.

2. Verfahren nach dem Anspruch 1, dadurch gekennzeichnet, dass man sämtliche Spannungskennlinien im Hinblick auf ihren Verlauf in Abhängigkeit von der Giesspiegelhöhe untersucht und die Ausdehnung der linearen sowie der nichtlinearen Teilstrecken auf jeder Kennlinie bestimmt und registriert und den Spiegel durch Auswertung der Information der Messpunkte auf mehreren Kennlinien eindeutig ermittelt.

3. Verfahren nach den Ansprüchen 1 und 2, dadurch gekennzeichnet, dass man jeweils ein gerades Kennlinienstück zur Messung heranzieht, die übrigen Werte nicht exakt bestimmt, sondern nur feststellt, ob sie grösser oder kleiner als Vergleichswerte sind, und damit festlegt, auf welchem Kennlinienstück sich der Messpunkt befindet und somit die Zweideutigkeit eliminiert.

4. Verfahren nach den Ansprüchen 1-3, dadurch gekennzeichnet, dass man die Sekundärspulen so zueinander anordnet, dass der gesamte Messbereich mit wenigen, möglichst geraden Stücken, im einfachsten Falle also mit dreien, erfasst wird.

5. Verfahren nach den Ansprüchen 1-4, dadurch gekennzeichnet, dass man einerseits die absoluten Spannungswerte der Kennlinien (S1-S2),... und andererseits die Differenzen zwischen den einzelnen, auf benachbarten Kennlinien abgelesenen Werten aufnimmt bzw. bildet und zum Bestimmen der Giesspiegellage benutzt.

6. Verfahren nach den Ansprüchen 1-5, dadurch gekennzeichent, dass man aus der relativen Aenderung von Werten die auf benachbarten Kennlinien abgelesen werden zueinander, auf ein Steigen bzw. ein Fallen des Giesspiegels schliesst.

7. Verfahren nach den Ansprüchen 1-6, dadurch gekennzeichnet, dass man auch die zeitlichen Anderungen der Werte auf den einzelnen Kennlinien bildet und als Messwerte heranzieht.

8. Verfahren nach den Ansprüchen 1-7, dadurch gekennzeichnet, dass man zum Beeinflussen der Giesspiegellage im Fall einer Aktivierung der Spannung an den Spulen (S1, S2 ..) auf die Abzugsgeschwindigkeit des Stranges einwirkt und im Fall einer Aktivierung der Spannung an den Spulen (.. S3, Sn) die Menge an zugeführtem Frischmetall regelt.

*FIG.1*

0087382

S 1,1 — P1

S 1,2

SP1

S 1,3

K

S 2,1 — P2

S 2,2

SP2

S 2,3

FIG. 2

FIG. 3

| | EINSCHLÄGIGE DOKUMENTE | | EP 83630023.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,D | EP - A1 - 0 010 539 (ARBED)<br>* Fig. 1,2· Seite 1, Zeile 1 - Seite 3, Zeile 14 *<br>-- | 1 | G 01 F 23/26<br>B 22 D 11/16 |
| Y | DE - A1 - 2 839 953 (CONCAST)<br>* Fig. 5-9; Seite 11, Zeile 8 - Seite 14, Zeile 21 *<br>-- | 1 | |
| A | AT - B - 342 325 (ELEKTROVARSKI)<br>* Gesamt * | 1. | |
| D | & FR-A1-2 251 811<br>-- | | |
| A | DE - B2 - 2 436 681 (MINE)<br>* Fig. 1; Ansprüche 1,5 *<br>-- | 1 | |
| A | AT - B - 326 285 (CONCAST)<br>* Ansprüche *<br>-- | 8 | **RECHERCHIERTE SACHGEBIETE (Int. Cl. ³)**<br><br>G 01 F 23/00<br>B 22 D 11/00 |
| A | r t p, REGELUNGSTECHNISCHE PRAXIS UND PROZESSRECHENTECHNIK, Heft 2, 1969<br>K. EWE, "Kokillenfüllstands-regelung an Brammen-Stranggießan-lagen"<br>Seiten 68-71<br>* Gesamt *<br>---- | 8 | |

Der vorliegende Recherchenbericht wurde für alle Patentansprüche erstellt.

| Recherchenort | Abschlußdatum der Recherche | Prüfer |
|---|---|---|
| WIEN | 29-04-1983 | GRONAU |